# FASCICULE DE BREVET EUROPEEN

(11) **EP 2 911 840 B1**
(45) Date de publication et mention de la délivrance du brevet: **26.04.2017**
(21) Numéro de dépôt: 13780348.2
(22) Date de dépôt: 22.10.2013
(51) Int. Cl.: B29C 69/00, B29C 51/08, B29C 45/14, B29K 101/12, B26D 7/27, B29C 51/32

(54) **MOULE POUR ESTAMPAGE ET SURMOULAGE D'INSERT EN MATÉRIAU COMPOSITE ET PROCÉDÉ DE FABRICATION DE PIÈCE SURMOULÉE ASSOCIÉ**
FORM ZUM STANZEN UND UMGIESSEN EINES VERBUNDWERKSTOFFEINSATZES SOWIE ENTSPRECHENDES VERFAHREN ZUR HERSTELLUNG EINER UMGOSSENEN KOMPONENTE
MOULD FOR STAMPING AND OVERMOULDING A COMPOSITE MATERIAL INSERT AND ASSOCIATED METHOD FOR PRODUCING AN OVERMOULDED COMPONENT

(30) Priorité: 26.10.2012 FR 1260265
(43) Date de publication de la demande: 02.09.2015
(73) Titulaire: VALEO SYSTEMES THERMIQUES, 78320 Le Mesnil Saint-Denis (FR)
(72) Inventeur: MESKIN, Issmail, F-78320 Le Mesnil Saint-Denis (FR); VELASCO, Sébastien, F-78280 Gyancourt (FR)
(74) Mandataire: Metz, Gaëlle
(86) Numéro de dépôt international: PCT/EP2013/072033
(87) Numéro de publication internationale: WO 2014/064082

(56) Documents cités:
- DE-A1- 2 353 460
- JP-A- S61 125 834
- US-A- 3 755 522

## Description

La présente invention concerne un moule pour surmoulage d'inserts en matériau composite, et plus particulièrement un moule pour surmoulage et estampage. L'invention concerne également un procédé de fabrication d'une pièce surmoulée utilisant le moule précédemment cité.

De plus en plus, notamment dans le domaine de la construction automobile, une attention particulière est apportée à la réduction de masse des différentes pièces tout en garantissant des performances mécaniques équivalentes voir supérieures.

Une solution connue pour répondre à ses contraintes imposées par les cahiers des charges des différents constructeurs est de proposer des pièces en matériau composite surmoulées. Ces pièces sont généralement fabriquées à partir d'un feuillet en matériau composite qui est dans un premier temps mis en forme, par exemple par estampage dans un premier moule, pour former un insert en matériau composite. Dans un second temps, les inserts en matériau composite sont usinés, par exemple au moyen de machines outils spécifiques pour ensuite être placés dans des moules pour surmoulage. Par exemple, le document DE 23 53 460 A1 décrit un moule pour estampage et surmoulage d'insert.

Ce procédé de fabrication nécessite ainsi l'utilisation de différents moules et machines outils qui allongent le temps de fabrication et qui ont un coût sur le prix de revient de la pièce en matériau composite surmoulée finale.

Un des buts de l'invention est donc de répondre au moins partiellement aux inconvénients de l'art antérieur et de proposer un moule ainsi qu'un procédé de fabrication améliorés et économiques.

La présente invention concerne donc un moule pour estampage et surmoulage d'insert en matériau composite, ledit moule comprenant un premier et un second demi-moules complémentaires l'un de l'autre et définissant un espace de réception et de surmoulage de l'insert en matériau composite, ainsi qu'au moins un orifice d'injection de matériau de surmoulage:
- le premier demi-moule comportant au moins un orifice à l'intérieur duquel est placée une lame en emporte-pièce portée par l'extrémité d'un support mobile, de sorte à pouvoir découper l'insert en matériau composite, ladite lame étant également jointive avec la paroi de l'orifice du premier demi-moule,
- le second demi-moule comporte un orifice, en regard du au moins un orifice du premier demi-moule, à l'intérieur duquel est placé un poussoir de forme correspondante et jointif avec la paroi de l'orifice du second demi-moule et mobile de sorte à pouvoir venir en contact jointif avec la lame.

Le moule permet ainsi, l'estampage de l'insert en matériau composite, la découpe de ce dernier selon un usinage désiré grâce à la lame et le surmoulage de l'insert en matériau composite de part le caractère jointif des contacts entre les différents éléments. Ces trois opérations peuvent être ainsi réalisées à partir d'un même moule de sorte à former une pièce surmoulée finale économique.

Selon un aspect de l'invention, en regard de la lame, le second demi-moule comporte une plaque de découpe.

Selon un autre aspect de l'invention, la plaque de découpe est en acier à haute dureté.

Selon un autre aspect de l'invention, la lame est un élément rapporté et démontable fixé sur le support.

Selon un autre aspect de l'invention, le support comporte un canal d'évacuation et que le poussoir comporte au moins une excroissance de sorte à pousser la chute de découpe de l'insert en matériau composite à l'intérieur dudit canal d'évacuation.

Selon un autre aspect de l'invention, les orifices, le support, le poussoir et la lame ont une forme circulaire.

La présente invention concerne également un procédé de fabrication d'une pièce surmoulée, comportant un insert en matériau composite, au moyen d'un moule selon l'un des aspects précédents et comportant les étapes suivantes :
- une étape de mise en place d'un matériau composite entre le premier et le second demi-moule,
- une étape de fermeture du moule et d'estampage par rapprochement des deux demi-moules,
- une étape de poussée du support de l'au moins un orifice vers l'espace de réception et de surmoulage de sorte à découper l'insert en matériau composite au moyen de la lame,
- une étape de poussée du poussoir de sorte qu'il entre en contact étanche avec la lame et repousse ladite lame et le support de sorte à refermer de façon étanche l'espace de réception et de surmoulage,
- une étape d'injection du matériau de surmoulage, et
- une étape d'ouverture du moule par séparation des deux demi-moules et d'évacuation de la pièce surmoulée.

Selon un aspect du procédé de fabrication, le support comporte un canal d'évacuation et le poussoir comporte au moins une excroissance de sorte à pousser la chute de découpe de l'insert en matériau composite à l'intérieur dudit canal d'évacuation.

Selon un autre aspect du procédé de fabrication, entre l'étape de poussée du au moins un support vers l'espace de réception et de surmoulage et l'étape d'injection du matériau de surmoulage, ledit procédé comporte une étape supplémentaire d'écartement des deux demi-moules afin d'agrandir l'espace de réception et de surmoulage pour accueillir un volume prédéterminé de matériau de surmoulage.

D'autres caractéristiques et avantages de l'invention apparaîtront plus clairement à la lecture de la description suivante, donnée à titre d'exemple illustratif et non limitatif, et des dessins annexés parmi lesquels :
- les figures 1 à 5 montrent des représentations en perspectives en coupe d'un moule selon l'invention, durant différents moments du procédé de fabrication,
- les figures 6 et 7 montrent des organigrammes montrant les étapes du procédé de fabrication selon deux modes de réalisation.

Les éléments identiques sur les différentes figures, portent les mêmes références.

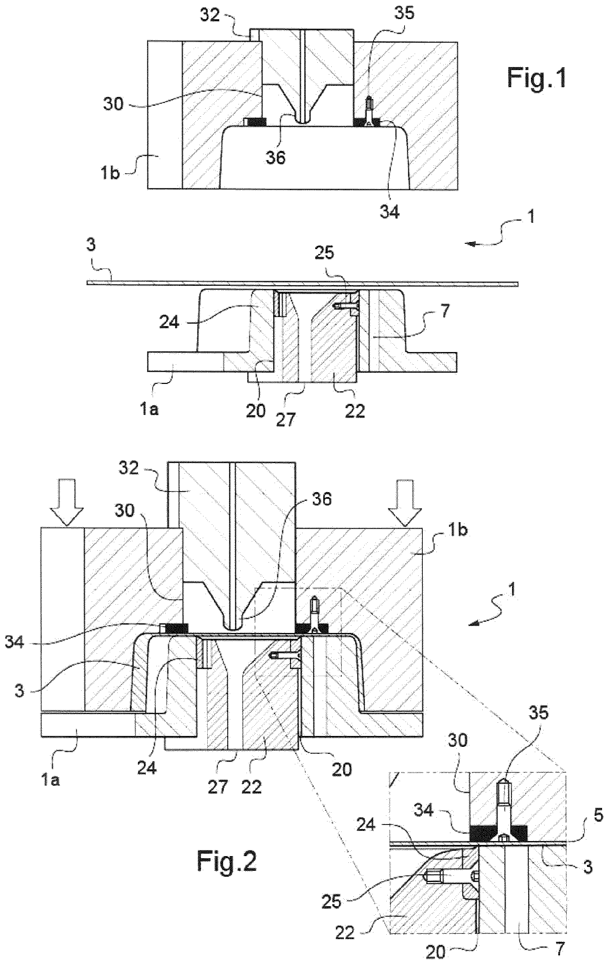

Les figures 1 à 5 montrent des représentations en perspectives en coupe d'un moule 1 selon l'invention, durant différents moment du procédé de fabrication 100.

Le moule 1 pour estampage et surmoulage d'insert en matériau composite 3 comprend un premier et un second demi-moules 1a, 1b complémentaires l'un de l'autre et définissant un espace de réception et de surmoulage 5 de l'insert en matériau composite 3. La forme des premier et second demi-moules 1a, 1b permet la mise en forme dudit insert en matériau composite 3 par estampage. Le moule 1 comporte également un orifice d'injection 7 de matériau de surmoulage 9 par lequel le matériau de surmoulage 9, par exemple un thermoplastique, est injecté dans l'espace de réception et de surmoulage 5.

Comme montré sur les figures 1 à 5, le premier demi-moule 1a comporte au moins un orifice 20 à l'intérieur duquel est placée une lame 24 en emporte-pièce portée par l'extrémité d'un support 22 mobile de sorte à pouvoir découper l'insert en matériau composite 3 par mouvement du support 22 en direction de l'espace de réception et de surmoulage 5. La lame 24 est jointive avec la paroi de l'orifice 20 du premier demi-moule 1a. La lame 24 peut venir de matière avec le support 22 ou bien, comme présenté sur les figures 1 à 5, être un élément rapporté et démontable fixé sur le support 22, par exemple au moyen de vis 25.

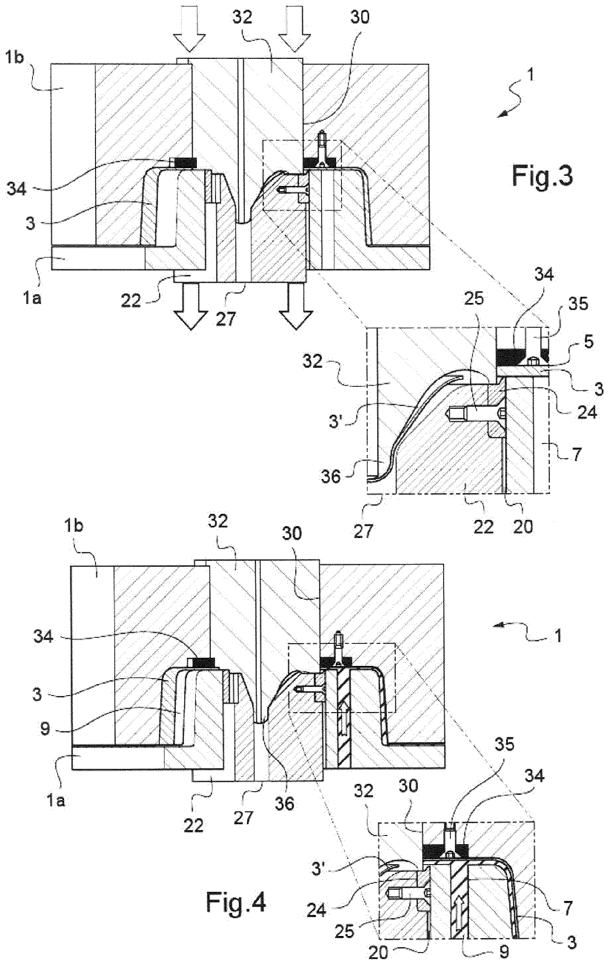

Le second demi-moule 1b comporte un orifice 30, en regard du au moins un orifice 20 du premier demi-moule 1a, à l'intérieur duquel est placé un poussoir 32 de forme correspondante et jointif avec la paroi de l'orifice 30 du second demi-moule 1b. Le poussoir est mobile à l'intérieur de l'orifice 30 du second demi-moule 1b de sorte à pouvoir venir en contact jointif avec la lame 24. Pour cela, l'orifice 30 du second demi-moule 1b est de taille inférieure à l'orifice 20 du premier demi-moule 1a, de sorte que l'extrémité du poussoir 32 puisse entrer en contact avec la lame 24 comme montrer sur les figures 3 et 4.

Le second demi-moule 1b peut également comporter une plaque de découpe 34, en regard de la lame 24 de sorte à faciliter la découpe de l'insert en matériau composite 3 ainsi que de protéger le second demi-moule 1b de ladite lame. La plaque de découpe 34 peut être en acier haute dureté et être fixée au second demi-moule 1b au moyen de vis 35.

Selon un mode de réalisation particulier, le support 22 peut comporter un canal d'évacuation 27 en son centre afin d'accueillir et de permettre l'évacuation de la chute de découpe 3' de l'insert en matériau composite 3. Le poussoir 32 du second demi-moule 1b peut quant à lui comporter au moins une excroissance 36 de sorte à repousser la chute de découpe 3' dans le canal d'évacuation 27 du poussoir 22.

Le fait que le poussoir 32 soit jointif avec la paroi de l'orifice 30 et également qu'il puisse venir en contact jointif avec la lame 24 (elle-même jointive avec l'orifice 20), permet de refermer de façon étanche l'espace de réception et de surmoulage 5. L'espace de réception et de surmoulage 5 peut ainsi accueillir une injection de matériau de surmoulage 9 via l'orifice d'injection 7 qui le remplira et surmoulera l'insert en matériau composite 3.

En faisant varier le nombre d'orifices 20, 30 il est ainsi possible d'usiner directement l'insert en matériau composite 3 à l'intérieur du moule 1. La forme de la découpe effectuée par la lame 34 en emporte pièce, ainsi que la forme du poussoir 32, du support 22 et des orifices 20, 30, peut par exemple être circulaire afin de former un orifice tubulaire pour le passage d'un axe ou d'une vis de fixation dans la pièce surmoulée 3, 9 après surmoulage.

De ce fait, le moule 1 permet, l'estampage de l'insert en matériau composite 3, la découpe de ce dernier selon un usinage désiré et le surmoulage de l'insert en matériau composite 3 de sorte à former une pièce surmoulée 3, 9 finale économique car nécessitant moins d'opérations et de machines outils pour sa fabrication.

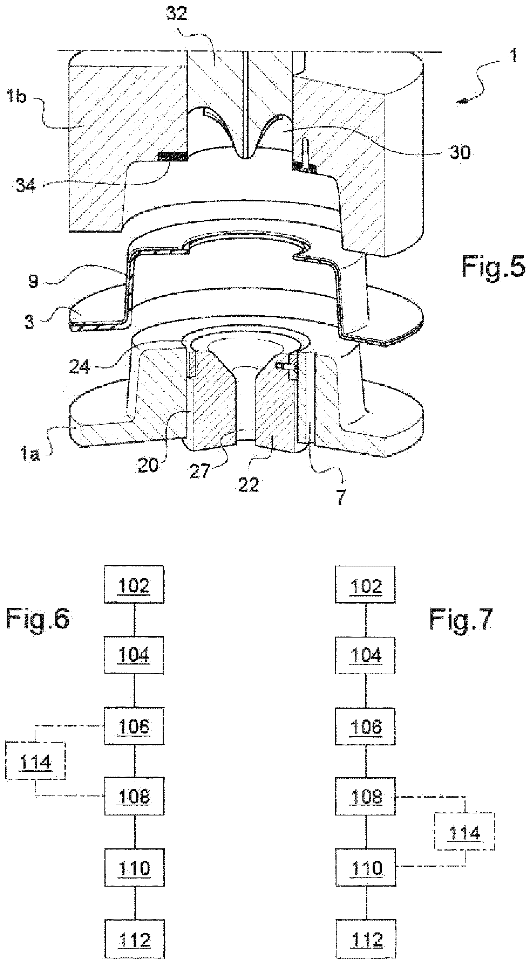

La présente invention concerne également un procédé de fabrication 100 d'une pièce surmoulée 3, 9 comportant un insert en matériau composite 3, au moyen d'un moule 1 comme décrit précédemment. Les figures 6 et 7 montrent un organigramme des différentes étapes d'un tel procédé de fabrication 100 selon deux modes de réalisation.

Le procédé de fabrication comporte ainsi une étape 102 de mise en place d'un matériau composite 3 dans le moule 1, par exemple sous forme d'un feuillet, et plus précisément entre les deux demi-moules 1a, 1b. Cette étape est notamment illustrée par la figure 1.

Suite à cette étape 102, est réalisée une étape 104 de fermeture du moule 1 et d'estampage par rapprochement des deux demi-moules 1a, 1b.

Ensuite vient une étape 106 de poussée du support 22 dans le au moins un orifice 20 du premier demi-moule 1a vers l'espace de réception et de surmoulage 5. Cette étape 106 a pour but de découper l'insert en matériau composite 3 au moyen de la lame 24 au sein de l'espace de réception et de surmoulage 5.

Les étapes 104 et 106 sont particulièrement illustrées par la figure 2.

L'étape 106 est suivie d'une étape 108 de poussée du poussoir 32 de sorte qu'il entre en contact étanche avec la lame 24 et repousse la lame 24 et le support 22 de sorte à refermer de façon étanche l'espace de réception et de surmoulage 5. Cette étape 106 est particulièrement illustrée par la figure 3.

Dans le mode de réalisation particulier où le support 22 comporte un canal d'évacuation 27 et où le poussoir présente au moins une excroissance 36, cette étape 108 permet également l'évacuation de la chute de découpe 3'. Cette dernière est repoussée par la au moins une excroissance 36 dans le canal d'évacuation 27.

Ensuite est réalisée une étape 110 d'injection du matériau de surmoulage 9 dans l'espace de réception et de surmoulage 5 au moyen de l'orifice d'injection 7. Cette étape 110 est particulièrement illustrée par la figure 4.

Entre l'étape 106 de poussée du support 22 vers l'espace de réception et de surmoulage 5 et l'étape 110 d'injection du matériau de surmoulage 9, ledit procédé peut comporter une étape supplémentaire 114 d'écartement des deux demi-moules 1a, 1b afin d'agrandir l'espace de réception et de surmoulage 5 pour accueillir un volume prédéterminé de matériau de surmoulage 9.

La figure 6 montre un premier mode de réalisation où l'étape supplémentaire 114 est réalisée à la suite de l'étape 106 de poussée du support 22 vers l'espace de réception et de surmoulage 5.

La figure 7 montre quant à elle un second mode de réalisation où l'étape supplémentaire 114 est réalisée à la suite de l'étape 108 de poussée du poussoir 32.

Enfin, est réalisée une étape 112 d'ouverture du moule 1 par séparation des deux demi-moules 1a, 1b et évacuation de la pièce surmoulée 3, 9. Cette étape 112 est particulièrement illustrée par la figure 5.

Ainsi, on voit bien que le moule 1 permet trois opérations que sont l'estampage de l'insert en matériau composite 3, la découpe de ce dernier selon un usinage désiré et le surmoulage de l'insert en matériau composite 3. Cela permet ainsi d'obtenir après le procédé de fabrication 100 une pièce surmoulée 3, 9 économique car nécessitant moins d'opérations et de machines outils pour sa fabrication.

## Revendications

1. Moule (1) pour estampage et surmoulage d'insert en matériau composite (3), ledit moule (1) comprenant un premier et un second demi-moules (1a, 1b) complémentaires l'un de l'autre et définissant un espace de réception et de surmoulage (5) de l'insert en matériau composite (3) **caractérisé en ce que** :
- le premier demi-moule (1a) comporte au moins un orifice (20) à l'intérieur duquel est placée une lame (24) en emporte-pièce portée par l'extrémité d'un support (22) mobile, de sorte à pouvoir découper l'insert en matériau composite (3), ladite lame (24) étant également jointive avec la paroi de l'orifice (20) du premier demi-moule (1a),
- le second demi-moule (1b) comporte un orifice (30), en regard du au moins un orifice (20) du premier demi-moule (1a), à l'intérieur duquel est placé un poussoir (32) de forme correspondante et jointif avec la paroi de l'orifice (30) du second demi-moule (1b) et mobile de sorte à pouvoir venir en contact jointif avec la lame (24).

2. Moule (1) selon la revendication précédente, **caractérisé en ce qu'**en regard de la lame (24), le second demi-moule (1b) comporte une plaque de découpe (34).

3. Moule (1) selon la revendication précédente, **caractérisé en ce que** la plaque de découpe (34) est en acier à haute dureté.

4. Moule (1) selon l'une des revendications précédentes, **caractérisé en ce que** la lame (24) est un élément rapporté et démontable fixé sur le support (22).

5. Moule (1) selon l'une des revendications précédentes, **caractérisé en ce que** le support (22) comporte un canal d'évacuation (27) et que le poussoir (32) comporte au moins une excroissance (36) de sorte à pousser la chute de découpe (3') de l'insert en matériau composite (3) à l'intérieur dudit canal d'évacuation (27).

6. Moule (1) selon l'une des revendications précédentes, **caractérisé en ce que** les orifices (20 ; 30), le support (22), le poussoir (32) et la lame (24) ont une forme circulaire.

7. Procédé de fabrication (100) d'une pièce surmoulée (3, 9), comportant un insert en matériau composite (3), au moyen d'un moule (1) selon l'une des revendications 1 à 6, **caractérisé en ce qu'**il comporte les étapes suivantes :
- une étape (102) de mise en place d'un matériau composite (3) entre le premier (1a) et le second demi-moule (1b),
- une étape (104) de fermeture du moule (1) et d'estampage par rapprochement des deux demi-moules (1a, 1b),
- une étape (106) de poussée du support (22) de l'au moins un orifice (20) vers l'espace de réception et de surmoulage (5) de sorte à découper l'insert en matériau composite (3) au moyen de la lame (24),
- une étape (108) de poussée du poussoir (32) de sorte qu'il entre en contact étanche avec la lame (24) et repousse ladite lame (24) et le support (22) de sorte à refermer de façon étanche l'espace de réception et de surmoulage (5),
- une étape (110) d'injection du matériau de surmoulage (9), et
- une étape (112) d'ouverture du moule (1) par séparation des deux demi-moules (1a, 1b) et d'évacuation de la pièce surmoulée (3, 9).

8. Procédé de fabrication (100) selon la revendication précédente, **caractérisé en ce que** le support (22) comporte un canal d'évacuation (27) et que le poussoir (32) comporte au moins une excroissance (36) de sorte à pousser la chute de découpe (3') de l'insert en matériau composite (3) à l'intérieur dudit canal d'évacuation (27).

9. Procédé de fabrication (100) selon la revendication précédente, **caractérisé en ce qu'**entre l'étape (106) de poussée du au moins un support (22) vers l'espace de réception et de surmoulage (5) et l'étape (110) d'injection du matériau de surmoulage (9), ledit procédé comporte une étape supplémentaire (114) d'écartement des deux demi-moules (1a, 1b) afin d'agrandir l'espace de réception et de surmoulage (5) pour accueillir un volume prédéterminé de matériau de surmoulage (9).

## Patentansprüche

1. Form (1) zum Stanzen und Umspritzen eines Einlegeteils aus Verbundwerkstoff (3), wobei die Form (1) eine erste und eine zweite Formhälfte (1a, 1b) enthält, die zueinander komplementär sind und einen Aufnahme- und Umspritzungsraum (5) des Einlegeteiles aus Verbundwerkstoff (3) definieren, **dadurch gekennzeichnet, dass**:
- die erste Formhälfte (1a) mindestens eine Öffnung (20) aufweist, in deren Innerem eine Stanzmesser-Schneide (24) vom Ende eines beweglichen Trägers (22) getragen angeordnet ist, um das Einlegeteil aus Verbundwerkstoff (3) stanzen zu können, wobei die Schneide (24) ebenfalls mit der Wand der Öffnung (20) der ersten Formhälfte (1a) aneinander liegt,
- die zweite Formhälfte (1b) eine Öffnung (30) gegenüber der mindestens einen Öffnung (20) der ersten Formhälfte (1a) aufweist, in deren Innerem ein Stößel (32) entsprechender Form und mit der Wand der Öffnung (30) der zweiten Formhälfte (1b) aneinander liegend und beweglich angeordnet ist, um mit der Schneide (24) in aneinander liegenden Kontakt kommen zu können.

2. Form (1) nach dem vorhergehenden Anspruch, **dadurch gekennzeichnet, dass** die zweite Formhälfte (1b) eine Stanzunterlage (34) gegenüber der Schneide (24) aufweist.

3. Form (1) nach dem vorhergehenden Anspruch, **dadurch gekennzeichnet, dass** die Stanzunterlage (34) aus Stahl großer Härte ist.

4. Form (1) nach einem der vorhergehenden Ansprüche, **dadurch gekennzeichnet, dass** die Schneide (24) ein angesetztes und ausbaubares Element ist, das am Träger (22) befestigt ist.

5. Form (1) nach einem der vorhergehenden Ansprüche, **dadurch gekennzeichnet, dass** der Träger (22) einen Ableitungskanal (27) aufweist, und dass der Stößel (32) mindestens eine Ausstülpung (36) aufweist, um den Stanzabfall (3') des Einlegeteils aus Verbundwerkstoff (3) ins Innere des Ableitungskanals (27) zu schieben.

6. Form (1) nach einem der vorhergehenden Ansprüche, **dadurch gekennzeichnet, dass** die Öffnungen (20; 30), der Träger (22), der Stößel (32) und die Schneide (24) eine Kreisform haben.

7. Herstellungsverfahren (100) eines einen Einlegeteil aus Verbundwerkstoff (3) aufweisenden umspritzten Bauteils (3, 9) mittels einer Form (1) nach einem der Ansprüche 1 bis 6, **dadurch gekennzeichnet, dass** es die folgenden Schritte aufweist:
- einen Schritt (102) des Einsetzens eines Verbundwerkstoffs (3) zwischen die erste (1a) und die zweite Formhälfte (1b),
- einen Schritt (104) des Schließens der Form (1) und des Stanzens durch Annähern der zwei Formhälften (1a, 1b),
- einen Schritt (106) des Schiebens des Trägers (22) von der mindestens einen Öffnung (20) zum Aufnahme- und Umspritzungsraum (5), um das Einlegeteil aus Verbundwerkstoff (3) mittels der Schneide (24) zu schneiden,
- einen Schritt (108) des Schiebens des Stößels (32), damit er in dichten Kontakt mit der Schneide (24) kommt und die Schneide (24) und den Träger (22) zurückschiebt, um den Aufnahme- und Umspritzungsraum (5) dicht zu verschließen,
- einen Schritt (110) des Einspeisens des Umspritzungsmaterials (9), und
- einen Schritt (112) des Öffnens der Form (1) durch Trennen der zwei Formhälften (1a, 1b) und des Entfernens des geformten Bauteils (3, 9).

8. Herstellungsverfahren (100) nach dem vorhergehenden Anspruch, **dadurch gekennzeichnet, dass** der Träger (22) einen Ableitungskanal (27) aufweist, und dass der Stößel (32) mindestens eine Ausstülpung (36) aufweist, um den Stanzabfall (3') des Einlegeteils aus Verbundwerkstoff (3) ins Innere des Ableitungskanals (27) zu schieben.

9. Herstellungsverfahren (100) nach dem vorhergehenden Anspruch, **dadurch gekennzeichnet, dass** zwischen dem Schritt (106) des Schiebens des mindestens einen Trägers (22) zum Aufnahme- und Umspritzungsraum (5) und dem Schritt (110) des Einspeisens des Umspritzungsmaterials (9) das Verfahren einen zusätzlichen Schritt (114) des Auseinanderspreizens der zwei Formhälften (1a, 1b) aufweist, um den Aufnahme- und Umspritzungsraum (5) zu vergrößern, um ein vorbestimmtes Volumen von Umspritzungsmaterial (9) zu empfangen.

## Claims

1. Mold (1) for stamping and overmolding inserts made of composite material (3), said mold (1) comprising a first and a second half-mold (1a, 1b) complementing one another and defining a space for reception and overmolding (5) of the insert made of composite material (3), **characterized in that**:
- the first half-mold (1a) comprises at least one orifice (20) inside which is placed a hole punch-forming blade (24) borne by the end of a mobile support (22), so as to be able to cut the insert made of composite material (3), said blade (24) being also contiguous with the wall of the orifice (20) of the first half-mold (1a),
- the second half-mold (1b) comprises an orifice (30), facing the at least one orifice (20) of the first half-mold (1a), inside which is placed a plunger (32) of corresponding form and contiguous with the wall of the orifice (30) of the second half-mold (1b) and mobile so as to be able to come into contiguous contact with the blade (24).

2. Mold (1) according to the preceding claim, **characterized in that**, facing the blade (24), the second half-mold (1b) comprises a cutting plate (34).

3. Mold (1) according to the preceding claim, **characterized in that** the cutting plate (34) is made of very hard steel.

4. Mold (1) according to one of the preceding claims, **characterized in that** the blade (24) is an attached and removable element fixed onto the support (22).

5. Mold (1) according to one of the preceding claims, **characterized in that** the support (22) comprises a discharge channel (27) and that the plunger (32) comprises at least one protuberance (36) so as to push the cutting scrap (3') from the insert made of composite material (3) inside said discharge channel (27).

6. Mold (1) according to one of the preceding claims, **characterized in that** the orifices (20; 30), the support (22), the plunger (32) and the blade (24) have a circular form.

7. Method for manufacturing (100) an overmolded part (3, 9), comprising an insert made of composite material (3), by means of a mold (1) according to one of Claims 1 to 6, **characterized in that** it comprises the following steps:
- a step (102) of placement of a composite material (3) between the first (1a) and the second (1b) half-mold,
- a step (104) of closure of the mold (1) and of stamping by bringing the two half-molds (1a, 1b) together,
- a step (106) of thrusting of the support (22) of the at least one orifice (20) toward the reception and overmolding space (5) so as to cut the insert made of composite material (3) by means of the blade (24),
- a step (108) of thrusting of the plunger (32) so that it enters into tight contact with the blade (24) and pushes back said blade (24) and the support (22) so as to tightly enclose the reception and overmolding space (5),
- a step (110) of injection of the overmolding material (9), and
- a step (112) of opening of the mold (1) by separation of the two half-molds (1a, 1b) and of discharging of the overmolded part (3, 9).

8. Manufacturing method (100) according to the preceding claim, **characterized in that** the support (22) comprises a discharge channel (27) and that the plunger (32) comprises at least one protuberance (36) so as to push the cutting scrap (3') from the insert made of composite material (3) inside said discharge channel (27).

9. Manufacturing method (100) according to the preceding claim, **characterized in that**, between the step (106) of thrusting of the at least one support (22) toward the reception and overmolding space (5) and the step (110) of injection of the overmolding material (9), said method comprises an additional step (114) of spacing apart of the two half-molds (1a, 1b) in order to enlarge the reception and overmolding space (5) to accommodate a predetermined volume of overmolding material (9).
